# FASCICULE DE BREVET EUROPEEN

(11) **EP 2 513 228 B1**
(45) Date de publication et mention de la délivrance du brevet: **03.04.2019**
(21) Numéro de dépôt: 10795327.5
(22) Date de dépôt: 16.12.2010
(51) Int. Cl.: C08L 77/02, C08L 77/06, E06B 3/263

(54) **COMPOSITION POLYAMIDE DE FAIBLE CONDUCTIVITE THERMIQUE**
POLYAMIDZUSAMMENSETZUNG MIT GERINGER WÄRMELEITFÄHIGKEIT
POLYAMIDE COMPOSITION WITH LOW THERMAL CONDUCTIVITY

(30) Priorité: 16.12.2009 FR 0959041
(43) Date de publication de la demande: 24.10.2012
(73) Titulaire: Rhodia Operations, 93306 Aubervilliers (FR)
(72) Inventeur: BRADLEY, Gerard, F-69126 Brindas (FR)
(74) Mandataire: Schuck, Alexander
(86) Numéro de dépôt international: PCT/EP2010/069867
(87) Numéro de publication internationale: WO 2011/073305

(56) Documents cités:
- WO-A1-2008/140196
- JP-A- 5 171 032
- US-A- 5 495 546
- US-A1- 2009 242 382
- Anonyme: "Technyl Alloy for improved surface finish", , [Online] octobre 2007 (2007-10), XP002575550, Rhodia Polyamide Extrait de l'Internet: URL:http://www.rhodia.com/en/binaries/poly amide_brochure_technyl_alloy_EN.pdf> [extrait le 2010-03-26]
- 3M Energy and Advance Materials Division: "3M Glass Bubbles K Series S Series", , [Online] septembre 2007 (2007-09), pages 1-4, XP002575551, Product Information Extrait de l'Internet: URL:http://multimedia.3m.com/mws/mediawebs erver?TTTTTVv_LdGtMYu7QY0TOZ9Tfwvrfdv_IwUT fwUTfTTTTTT--> [extrait le 2010-03-26]

## Description

La présente invention concerne une composition polyamide apte à être mise en oeuvre dans divers procédés de transformation et notamment pour la fabrication de profilé d'extrusion ayant une faible conductivité thermique. Une telle composition comprend notamment des billes de verre. La composition est préférentiellement une composition à mouler, par exemple sous forme de granulés ou de poudre, servant à la fabrication d'articles par un procédé de moulage par injection.

### ART ANTERIEUR

Les polyamides techniques sont utilisés pour la réalisation de nombreux articles dans différents domaines, comme le domaine de l'automobile, où des propriétés spécifiques de rigidité, de résistance aux chocs, de stabilité dimensionnelle, en particulier à température relativement élevée, d'aspect de surface, de densité et de poids sont particulièrement recherchées. Le choix d'un matériau pour une application donnée est généralement guidé par le niveau de performances exigées vis-à-vis de certaines propriétés et par son coût. On cherche en effet toujours de nouveaux matériaux susceptibles de répondre à un cahier des charges en terme de performances et/ou de coûts.

JP 05171032 A décrit une composition thermoplastique comprenant :
- un polyamide thermoplastique,
- un copolymère styrénique thermoplastique, plus précisément du SEBS,
- 5% en poids de billes de verre creuses,
- des fibres de verres.

WO 2008/140196 A1 décrit une composition thermoplastique comprenant :
- un polyamide thermoplastique (Nylon 66),
- un copolymère d'éthylène et d'octène modifié par 1 % d'anhydride maléique,
- une polyoléfine modifié par 1% d'anhydride maléique,
- des fibres de verres.

Dans son example 1, le document décrit une composition comprenant 77% de Nylon 66, 15% de fibres de verres, 5% de polyoléfine modifié acide et 3% de caoutchouc élastomère modifié acide. Les compositions sont utilisées pour la couverture interne des cadres de porte.

« Technyl alloy for improved surface finish », octobre 2007 (online), XP002575550, Rhodia Polyamide concerne de composition à base de polyamide destinée à être utilisée dans des portes. Le document décrit une composition thermoplastique de type PA/ABS (« reinforced PA/ABS alloy») comprenant
- une matrice à base de nylon,
- un élastomère thermoplastique du type ABS.

Pour la réalisation de certains articles plastiques comme les encadrements de porte et de fenêtre il existe un besoin de matériau présentant une faible conductivité thermique, sans diminution drastique des autres propriétés du polyamide telles que notamment les propriétés mécaniques et les facilités de mise en oeuvre.

### INVENTION

La demanderesse vient de découvrir de manière tout à fait surprenante que l'utilisation de billes de verre avec certains polymères thermoplastiques dans une composition polyamide permettait d'obtenir une nette réduction de la conductivité thermique et ainsi éviter pour certaines applications la perte de calorie par établissement d'un pont thermique. Les compositions de l'invention présentent par ailleurs un très bon compromis entre la réduction de la conductivité thermique et la température de déformation sous charge (HDT). Une telle composition présente également comme avantage d'avoir une absorption d'humidité diminuée et une réduction de la densité par rapport a des formulations polyamides classiques.

La présente invention concerne ainsi une composition thermoplastique comprenant au moins les composés suivants:
- Composé A: polyamide thermoplastique,
- Composé B: polymère thermoplastique ayant une conductivité thermique plus faible que le polyamide A,
- Composé C: éventuellement un ou plusieurs agents de compatibilisation entre le composé A et le composé B, dont au moins un comprend des groupements fonctionnels de compatibilisation avec le composé A,
- Composé D: des billes de verre creuses, et
- Composé E: éventuellement des charges de renfort ou de remplissage ;
ledit composé B étant un (co)polymère styrénique et la composition comprenant de 10 à 20 %, par rapport au poids total de la composition, de billes de verre creuses et de 0,1 à 30 % en poids, par rapport au poids total de la composition, de composé B.

La conductivité thermique de cette composition, exprimée en W/m.k, est préférentiellement inférieure à **0,272X² + 0,088X + CtM,** dans laquelle :
- X est la proportion en poids de charges de renfort ou de remplissage E) présente dans la composition et
- CtM est la conductivité thermique de la matrice M comprenant le polyamide A, le polymère B et le composé C, en absence de toutes charges, notamment les composés D et E.

X est préférentiellement compris entre 0,1 et 60 %, par rapport au poids total de la composition, plus préférentiellement entre 15 et 50 %.

Cette conductivité thermique est notamment mesurée sur le produit sec (dry as molded) selon la norme ASTM-1114-98. Le conditionnement des pièces pour la mesure de la conductivité thermique peut être effectué selon la norme ISO 291 :2008 avec une température de 23°C et une humidité relative de 50% pour une durée de 100h.

A titre d'exemple, une composition polyamide selon la présente invention comprenant du polyamide 66, ledit polyamide 66 ayant une conductivité thermique de 0,3 W/m.k, et 25% en poids de fibres de verre, la charges de renfort ou de remplissage E), présentera une conductivité thermique inférieure à 0,272.(0,25)² + 0,088.0,25 + 0,3, c'est-à-dire inférieure à 0,339 W/m.k.

La composition est préférentiellement une composition à mouler ou extruder, par exemple sous forme de granulés ou de poudre, servant à la fabrication d'articles par un procédé de moulage par injection ou d'extrusion.

Les composés A et B peuvent être miscibles ou non miscibles. La composition selon l'invention présente de préférence une phase continue de polyamide, le composé A, dans laquelle sont dispersés des nodules comprenant le composé B. A cet effet la composition comporte avantageusement plus de polyamide A que de composé B. La dispersion du composé B dans le polyamide est facilitée par la présence de groupements fonctionnels de compatibilisation avec le polyamide. Ces groupements fonctionnels peuvent être portés par le composé B, ou par un agent de compatibilisation, généralement miscible avec le composé B. La compatibilisation permet d'améliorer le comportement des compositions.

### Composé A

Le composé A est du polyamide thermoplastique. Il peut s'agir d'un seul polyamide ou d'un mélange de plusieurs polyamides. Dans ce dernier cas, le mélange peut soit être obtenu par une opération précédant la préparation de la composition, soit être obtenu au cours de la préparation de la composition par mise en oeuvre simultanée ou successive des différents polyamides.

Le polyamide peut notamment être choisi parmi les polyamides du type de ceux obtenus à partir de lactames et/ou d'amino-acides, les polyamides du type de ceux obtenus à partir de diacides et de diamines, les copolyamides de ces deux types de polyamides.

On préfère tout particulièrement les polyamides choisis parmi le polyamide 6, le polyamide 11, le polyamide 12, le polyamide 4.6, le polyamide 6.6, le polyamide 6.10, le polyamide 6.36, les copolyamides 6/6.6 et 6/6.36, les mélanges et copolymères à base de ces polyamides et copolyamides.

Le composé A est avantageusement à base de polyamide 6.6. Il peut s'agir de polyamide 6.6 seul ou d'un mélange de polyamide 6.6 et de polyamide 6. Dans le cadre d'un tel mélange, la proportion en poids de polyamide 6 par rapport au poids total de polyamide est de préférence comprise entre 1 et 30%.

Les compositions à base de polyamide 6.6 présentent d'excellentes propriétés mécaniques et d'excellentes propriétés de résistance à la chaleur, et une dureté importante.

La présence de polyamide 6 avec le polyamide 6.6 peut permettre notamment de réduire le retrait après mise en forme, d'améliorer la compatibilisation entre le polyamide et le composé B et donc d'améliorer certaines propriétés mécaniques.

Le polyamide peut éventuellement présenter plus de groupements terminaux amines que de groupements terminaux acides. Une telle caractéristique améliore la compatibilisation, les propriétés mécaniques et/ou l'aspect de surface des articles constitués de la composition.

La composition de l'invention peut également comprendre les copolyamides dérivés notamment des polyamides ci-dessus, ou les mélanges de ces polyamides ou copolyamides.

On utilise généralement des polyamides de poids moléculaires adaptés aux différents procédés de mises en oeuvre.

Le polyamide modifié peut notamment être un polymère comprenant des chaînes macromoléculaires étoiles ou H, branché, ramifié, hyper-ramifié, et le cas échéant des chaînes macromoléculaires linéaires. Les polymères comprenant de telles chaînes macromoléculaires étoiles ou H sont par exemple décrits dans les documents FR2743077, FR2779730, US5959069, EP0632703, EP0682057 et EP0832149.

Le polyamide modifié peut être un polymère de type arbre statistique, de préférence un copolyamide présentant une structure arbre statistique. Ces copolyamides de structure arbre statistique ainsi que leur procédé d'obtention sont notamment décrits dans le document WO99/03909. La matrice de l'invention peut également être une composition comprenant un polymère thermoplastique linéaire et un polymère thermoplastique étoile, H et/ou arbre tels que décrits ci-dessus. La matrice de l'invention peut également comprendre un copolyamide hyperbranché du type de ceux décrits dans le document WO 00/68298. La composition de l'invention peut également comprendre toute combinaison de polymère thermoplastique linéaire, étoile, H, arbre, copolyamide hyperbranché tel que décrit ci-dessus.

La composition selon l'invention présente préférentiellement de 30 à 95 % en poids de polyamide, préférentiellement de 40 à 80 % en poids, par rapport au poids total de la composition.

La composition peut également comprendre, selon la propriété finale souhaitée, un mélange de polyamide modifié selon l'invention et un ou plusieurs autres polymères, tel que par exemple du polyester, des polyoléfines, du polystyrène, du polycarbonate, du sulfure de polyphénylène, de l'oxyde de polyphénylène, du polyacétal, du polysulfone, de la polyéthersulfone, du polyétherimide, de la polyéthercétone, une résine d'acide polylactique, une résine de polysulfone, une résine élastomère ou des mélanges de ceux-ci.

### Composé B

Le composé B est notamment choisi dans le groupe comprenant : les (co)polymères styréniques.

Le composé B est un (co)copolymère styrénique, tel que notamment racrylonitrile-butadiène-styrène (ABS), l'acrylonitrile-styrène-acrylate de butyle (ASA), le styrène-acrylonitrile (SAN), le styrène-éthylene-butadiène- styrène (SEBS) ou le styrène-butadiène-styrène (SBS). Le (co)copolymère styrénique peut comprendre un caoutchouc sur lequel sont greffés de l'acrylonitrile et un composé styrénique, notamment choisi parmi le styrène et l'a- méthyle-styrène. Il peut comporter en plus des groupements fonctionnels destinés à améliorer sa compatibilité avec le polyamide. Le copolymère comprend de préférence entre 10 et 90% en poids de caoutchouc. La teneur en caoutchouc de l'ensemble du composé B est de préférence de 10 à 35 % en poids.

Le caoutchouc est de préférence choisi dans le groupe comprenant : le polybutadiène, le caoutchouc butadiène-styrène, le caoutchouc butadiène-acrylate, le caoutchouc butadiène-acrylonitrile, le caoutchouc d'éthylène-propylène (EPR) et le caoutchouc d'éthylène-propylène-diène (EPDM) ou des mélanges de deux ou de plus de deux de ces caoutchoucs.

Le composé B peut être préparé de la manière habituelle, par exemple par greffage des monomères du composé styrénique et de l'acrylonitrile sur le caoutchouc. Ceci peut être effectué par polymérisation en masse, en solution ou en suspension. Il est également possible de combiner deux ou plus de deux de ces méthodes de polymérisation pour réaliser, par exemple, la polymérisation en masse en solution, la polymérisation en masse en suspension ou la polymérisation en émulsion-suspension. La polymérisation est de préférence réalisée en présence de substances habituelles, telles que des donneurs de radicaux libres, facultativement en combinaison avec un système redox, des agents régulateurs de chaîne, des agents stabilisants, des agents de mise en suspension, des émulsifiants et analogues.

Le composé B est avantageusement un copolymère acrylonitrile-butadiène-styrène (ABS), comprenant le cas échéant des fonctions de compatibilisation avec le polyamide. La teneur en poids de butadiène dans ce composé est par exemple comprise entre 15 et 35%, la teneur en poids de styrène par rapport au poids de styrène et d'acrylonitrile est de préférence comprise entre 20 et 80%, de préférence supérieure à 50%. Il peut par exemple s'agir d'un copolymère acrylonitrile-butadiène-styrène dont les proportions en acrylonitrile, butadiène et styrène sont respectivement d'environ 25%, 25% et 50%.

Selon un mode de réalisation particulier, le composé B comprend des groupements fonctionnels de compatibilisation avec le polyamide. Ces groupements sont avantageusement choisis parmi les groupements anhydride maléique, acide carboxylique, ester. De tels groupements sont par exemple obtenus par utilisation d'un comonomère lors de la préparation du composé B, par exemple de l'anhydride maléique ou de l'acrylamide.

La composition comprend de 0,1 à 30 % en poids de composé B, préférentiellement de 1 à 20 % en poids, par rapport au poids total de la composition.

Préférentiellement, le composé B présente une conductivité thermique inférieure ou égale à 0,2 W/m.k.

### Composé C

La composition de l'invention présente préférentiellement, mais pas obligatoirement, au moins un agent de compatibilisation entre le composé A et le composé B, comprenant au moins groupement fonctionnel de compatibilisation avec le composé A.

Les groupements fonctionnels de compatibilisation présents dans au moins un des agents peuvent être de même nature que ceux éventuellement présents dans le composé B. Ils sont avantageusement choisis parmi les groupements anhydride maléique, acide carboxylique, et ester. De tels groupements sont dérivés d'un comonomère utilisé lors de la préparation du composé C, par exemple de l'anhydride maléique.

Dans le cas où il s'agit de plusieurs agents, le mélange peut soit être obtenu par une opération précédant la préparation de la composition, soit être obtenu au cours de la préparation de la composition par mise en oeuvre simultanée ou successive des différents agents de compatibilisation.

Selon le mode de réalisation pour lequel le composé B comprend des groupements de comptabilisation avec le polyamide, les compositions ne comportent avantageusement pas de composé C.

A titre d'agents de compatibilisation, on cite les copolymères styrène-maléïmides greffés avec des groupements fonctionnels choisis parmi les acides carboxyliques et les anhydrides. Par copolymère styrène-maléïmide, on entend un polymère présentant des motifs issus du styrène et des motifs maléimides de formule (I) : 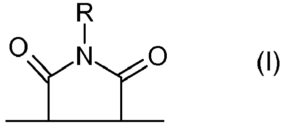 dans laquelle R est choisi parmi l'hydrogène, les radicaux alkyles, les radicaux aromatiques ou arylaromatique. R est par exemple un groupement phényle. Le motif maléimide peut par exemple être choisi parmi le N-phénymaléimide, le N-(o-méthylphényle maléimide), le N-(m-méthylphényle maléimide), le N-(p-méthylphényle maléimide). De tels copolymères peuvent par exemple être obtenus par copolymérisation de styrène et d'anhydride maléique puis réaction partielle avec une amine, par exemple l'aniline pour former les motifs maléimide à partir des motifs anhydride. Les motifs anhydrides n'ayant pas réagi avec l'amine constituent la fonctionnalisation. Un autre procédé consiste à copolymériser directement du styrène, du maléimide et de l'anhydride maléique.

On préfère tout particulièrement à titre d'agent de compatibilisation les copolymères styrène-maléimide greffés anhydride maléique (SMI-g-MA), ceux notamment dont les proportions en poids des différents motifs sont comprises, entre 40 et 60 % de motifs styrène, entre 40 et 60 % de motifs N-phénylemaléimide, entre 0,1 et 5% de motifs anhydride maléique. Ces copolymères ont des propriétés mécaniques et thermiques particulièrement élevées, ce qui rend les compositions particulièrement performantes, en particulier en ce qui concerne les propriétés évaluées à des températures relativement élevées.

La composition peut comprendre également un copolymère styrène-maléïmide non greffé.

A titre d'agent de compatibilisation on cite également les copolymères block styrène-éthylene-butadiène-styrène ou styrène-butadiène-styrène le cas échéant totalement ou partiellement hydrogénés, présentant des groupements fonctionnels de compatibilisation avec le polyamide, par exemple des groupements fonctionnels anhydride maléique. De tels composés sont connus de l'homme du métier. Ce type de copolymères est par exemple commercialisé par la société Shell sous la gamme Kraton. On cite plus particulièrement le copolymère styrène-éthylène-butylène-styrène modifié avec de l'anhydride maléique (SEBS-g-MA).

La proportion en poids de cet agent dans la composition est avantageusement comprise entre 0,5 et 10%. Elle est de préférence inférieure à 5%.

On peut avantageusement utiliser à titre d'agents de compatibilisation à la fois du Styrène-Maléimide greffé anhydride maléique et du SEBS greffé anhydride maléique.

On peut également utiliser à titre d'agent de compatibilisation un copolymère styrène-acrylonitrile greffé anhydride maléique, ou même de l'anhydride maléique introduit directement au cours de la préparation de la composition.

### Composé D

Les composés D sont des billes de verre creuses. Ces billes de verre sont bien connues et notamment mentionnés dans le Plastic Additives Handbook, Hanser, 4th édition, pages 537-538.

Les billes de verre creuses présentent généralement un diamètre moyen compris entre 1 pm et 2 mm, préférentiellement entre 10 et 500 pm, plus préférentiellement entre 5 et 250 pm. Les billes de verre creuses présentent une densité généralement inférieure à 1 g/cm³, notamment entre 0,2 et 0,6 g/cm³.

Les billes de verres préférés de l'invention sont celles présentant une résistance suffisante à l'éclatement lors qu'elles sont mises en oeuvre dans des procédés de mise en oeuvre, comme l'extrusion ou le moulage par injection, dans la composition selon l'invention, de manière à conférer à ladite composition une réduction de densité d'au moins 0,4 % pour chaque 1 % en poids de bille de verre ajoutée à ladite composition. La densité peut être mesurée selon la norme ISO 1183.

On recherche préférentiellement l'utilisation de billes de verres creuses permettant une diminution d'au moins 5 % du poids totale de la composition.

La composition polyamide comprend de 10 à 20 % en poids de billes de verre, par rapport au poids total de la composition.

Les billes de verre peuvent comprendre un revêtement, comme notamment un revêtement de silane.

### Composé E

La composition peut éventuellement comprendre des charges de renfort ou de remplissage, notamment fibreuses ou non fibreuses.

Les charges de renfort ou de remplissages selon la présente invention, peuvent être par exemple des charges fibreuses et/ou des charges non fibreuses.

Comme charge fibreuses on peut citer les fibres de verre, les fibres de carbone, les fibres naturelles, les fibres d'aramides, et les nanotubes, notamment de carbone. On peut citer comme fibres naturelles le chanvre et le lin. Parmi les charges non fibreuses on peut notamment citer toutes les charges particulaires, lamellaires et/ou les nanocharges exfoliables ou non exfoliables comme l'alumine, le noir de carbone, les argiles alumino-silicates, les montmorillonites, le phosphate de zirconium, le kaolin, le carbonate de calcium, les diatomées, le graphite, le mica, la silice, le dioxyde de titane, les zéolites, le talc, la wollastonite, les charges polymériques telles que, par exemple, des particules de diméthacrylates.

On préfère particulièrement les charges inorganiques.

Il est parfaitement possible selon l'invention que la composition comprenne plusieurs types de charges de renfort. De façon préférentielle, la charge la plus utilisée peut être les fibres de verres, du type dit coupé (chopped), notamment ayant un diamètre compris entre 7 et 14 µm. Ces fibres de verre peuvent présenter une longueur moyenne comprise entre 200 et 400 µm. Ces charges peuvent présenter un ensimage surfacique qui assure l'adhésion mécanique entre les fibres et la matrice polyamide.

La concentration pondérale des charges de renfort ou de remplissage est comprise avantageusement entre 1 % et 60 % en poids par rapport au poids total de la composition, de préférence entre 15 et 50 %.

La composition selon l'invention peut en outre comprendre des additifs classiquement utilisés pour la fabrication de compositions polyamides. Ainsi, on peut citer les lubrifiants, les agents ignifugeants, les plastifiants, les agents nucléants, les agents modificateurs de chocs, les catalyseurs, les stabilisants lumière et/ou thermique, les antioxydants, les antistatiques, les colorants, les matifiants, les additifs d'aide au moulage ou autres additifs conventionnels.

On peut notamment ajouter à la composition polyamide des agents modifiants la résistance aux chocs. Ce sont généralement des polymères d'élastomères qui peuvent être utilisés à cet effet. Des exemples d'élastomères convenables sont les éthylène-ester acrylique-anhydride maléïque, les ethylène-propylène-anhydride maléïque, les EPDM (ethylène-propylène-diène momonère) avec éventuellement un anhydride maléïque greffé. La concentration pondérale en élastomère est avantageusement comprise entre 0,1 et 30 % par rapport au poids total de la composition.

On préfère notamment les agents modificateurs de chocs comprenant des groupements fonctionnels réactifs avec le polyamide. On peut par exemple citer les terpolymères d'éthylène, ester acrylique et glycidyl méthacrylate, les copolymères d'éthylène et de butyl ester acrylate, les copolymères d'éthylène, n-butyl acrylate et glycidyl méthacrylate, les copolymères d'éthylène et d'anhydride maléique, les copolymères styrène-maléïmides greffés avec de l'anhydride maléique, les copolymères styrène-éthylène-butylène-styrène modifié avec de l'anhydride maléique, les copolymère styrène-acrylonitrile greffés anhydrides maléiques, les copolymères acrylonitrile butadiène styrène greffés anhydrides maléiques, et leurs versions hydrogénées. La proportion en poids de ces agents dans la composition totale est notamment comprise entre 0,1 et 40 %.

Ces charges et additifs peuvent être ajoutés au polyamide modifié par des moyens usuels adaptés à chaque charge ou additif, tel que par exemple lors de la polymérisation ou en mélange en fondu.

Les matériaux de l'invention sont généralement obtenus par mélange des différents constituants à chaud, par exemple dans une extrudeuse mono ou bivis, à une température suffisante pour maintenir la résine polyamide en milieu fondu ; ou a froid, dans un mélangeur mécanique notamment. La composition est préférentiellement réalisée par mélange des matériaux en phase fondue.

Généralement, le mélange obtenu est extrudé sous forme de joncs qui sont coupés en morceaux pour former des granulés. Les composés peuvent être ajoutés à n'importe quel moment du processus de fabrication du matériau plastique, notamment par mélange a chaud ou a froid avec la matrice plastique. L'addition des composés et des additifs, peut être réalisée par ajout de ces composés dans la matrice plastique fondue sous forme pure ou sous forme de mélange concentré dans une matrice telle que par exemple une matrice plastique.

La composition selon l'invention peut être utilisée pour tout procédé de mise en forme des matières plastiques, pour la fabrication d'articles ; tels que par exemple les procédés de moulage, notamment le moulage par injection, ou d'extrusion tel que l'extrusion soufflage.

Il est parfaitement possible d'utiliser des procédés de mise en forme de mousse polyamide, notamment ceux utilisant des agents chimiques ou des agents physiques comme un fluide supercritique (SCF), notamment lors d'un procédé de mise en forme, tel que l'extrusion ou le moulage par injection. Un tel procédé est généralement connu sous la dénomination FIM, pour foam injection molding. On peut citer à cet effet les quelques considérations du brevet US5158986. Ceci permet d'obtenir un article microcellulaire notamment appelé mousse.

L'invention concerne ainsi également un article polyamide microcellulaire obtenu par mise en forme de la composition selon l'invention. Ces articles également appelés mousses peuvent être des mousses structurelles ou des mousses non structurelles. Les mousses structurelles sont des mousses rigides composées d'un coeur de faible densité et d'une peau dont la densité est proche de celle du polymère composant la matrice. Ces mousses peuvent être utilisées comme structures allégées dans le domaine de l'aéronautique ou de l'automobile par exemple. Les mousses non structurelles peuvent être flexibles ou rigides. Les mousses rigides sont utilisées dans le domaine de l'isolation thermique ; le gaz présent dans les cellules joue le rôle d'isolant. Les mousses flexibles sont utilisées dans le domaine de l'ameublement et de la sellerie, pour leurs propriétés de compressibilité et d'amortissement, dans le domaine de l'emballage en raison de leur faible poids, ainsi que dans le domaine de l'isolation phonique ; les mousses présentant une porosité ouverte ont la particularité d'absorber certaines fréquences.

L'utilisation des compositions selon l'invention est particulièrement intéressante dans le cadre de la fabrication d'articles pour les industries automobile, électrique et du bâtiment.

La présente invention concerne notamment des profilés d'extrusion à base de la composition selon l'invention. Ces profilés sont notamment utilisés pour les encadrements de fenêtre et de portes. On peut par exemple les utiliser pour l'étanchéité entre les vitres et les encadrements métallique, notamment en aluminium. Ces profilés peuvent par exemple être posés ou surmoulés dans ces encadrements. Ces profilés peuvent être notamment des mousses comme explicité précédemment.

L'invention concerne ainsi aussi des fenêtres et portes comprenant dans leur encadrement des profilés d'extrusion à base de la composition selon l'invention.

La présente invention concerne ainsi aussi un procédé de moulage par injection dans lequel on introduit dans un dispositif de moulage par injection une composition selon l'invention, notamment sous forme de granulés, et l'on procède au moulage.

Le terme et/ou inclut les significations et, ou, ainsi que toutes les autres combinaisons possibles des éléments connectés à ce terme.

D'autres détails ou avantages de l'invention apparaîtront plus clairement au vu des exemples donnés ci-dessous uniquement à titre indicatif.

### PARTIE EXPERIMENTALE

### Caractérisations

### Exemple 1 : préparation des formulations

Des formulations de polyamide 66 (PA 66 A27 00 de Rhodia) et diverses proportions d'ABS (Terulan H1-10), de compatibilisant (SMI-g-MA), de polyamide 6 (PA6 S27), de billes de verre creuses (3M im30K), des fibres de verre (Vetrotex FV983 10 µm) et 1 % d'additifs classiques, dans une extrudeuse bi-vis Werner & Pfleiderer ZSK 40 à une vitesse de vis de 230 rpm avec le profile de température suivant en degré Celsius : Zone 1 : 250 ; Zone 2 : 260 ; Zone 3 : 260 ; Zone 4 : 260 ; Zone 5 : 270 ; Zone 6 : 270 ; Zone 7 : 270 ; Zone 8 : 280. Les joncs sortis de l'extrudeuse sont coulés dans un bac de refroidissement à eau et ensuite granulés.

Ces formulations ont été testées et les résultats sont mentionnés dans le tableau 1 suivant :

**Tableau 1**

| **(%)** | **C1** | **C2** | **C3** | **C4** | **C5** | **C6** | **1** |
|---|---|---|---|---|---|---|---|
| PA66 | 74 | 58 | 56 | 47 | 50,5 | 39 | 40 |
| ABS | - | - | - | - | 10 | 20 | 10 |
| Compatibilisant | - | - | - | - | 3,5 | 5 | 4 |
| PA6 | - | 6 | 6 | 6 | 10 | 10 | 10 |
| Billes de verre | - | 10 | 12 | 21 | - | - | 10 |
| Fibres de verre | 25 | 25 | 25 | 25 | 25 | 25 | 25 |
| | | | | | | | |
| Allongement à la rupture ISO 527 (MPa) | 167 | 126 | 126 | 115 | 149 | 136 | 145 |
| Module de tension ISO 527 (MPa) | 8010 | 9020 | 8920 | 9600 | 8690 | 8280 | 9290 |
| Densité ISO 1183 (g/cm3) | 1,31 | 1,20 | 1,14 | 1,1 | 1,3 | 1,28 | 1,24 |
| Réduction de densité (%) | - | 8 | 13 | 16 | - | - | 5,3 |
| Réduction de densité par % de billes de verre | - | 0,8 | 1 | 0,8 | - | - | 0,53 |
| HDT 1,8 MPa (°C) | 247 | 250 | 250 | 250 | 235 | 210 | 235 |
| Conductivité thermique (W/m.K) | 0,339 | 0,312 | 0,295 | 0,28 | 0,280 | 0,26 | 0,270 |

*Les pourcentages sont exprimés en pourcentage par rapport au poids total de la composition*

La conductivité thermique est mesurée selon la norme ASTM-1114-98 sur une pièce conditionnée selon la norme ISO 291 :2008 avec une température de 23°C et une humidité relative de 50% pour une durée de 100h.

On observe ainsi que la composition 1 selon l'invention présente un excellent compromis de propriétés mécaniques, de réduction de la densité et de conductivité thermique. La composition de l'invention présente par ailleurs un très bon compromis entre la réduction de la conductivité thermique et la température de déformation sous charge (HDT).

La composition 1 présente par ailleurs une réduction de 20 % de l'absorption d'humidité par rapport aux formulations classiques polyamide (C1). Ceci permet d'augmenter de manière importante la stabilité dimensionnelle des articles obtenus à partir de ces compositions.

## Revendications

1. Composition thermoplastique comprenant au moins les composés suivants:
- Composé A: polyamide thermoplastique,
- Composé B: polymère thermoplastique ayant une conductivité thermique plus faible que le polyamide A,
- Composé C: éventuellement un ou plusieurs agents de compatibilisation entre le composé A et le composé B, dont au moins un comprend des groupements fonctionnels de compatibilisation avec le composé A,
- Composé D: des billes de verre creuses, et
- Composé E: éventuellement des charges de renfort ou de remplissage ;
ledit composé B étant un (co)polymère styrénique et la composition comprenant de 10 à 20 %, par rapport au poids total de la composition, de billes de verre creuses et de 0,1 à 30 % en poids, par rapport au poids total de la composition, de composé B.

2. Composition selon la revendication 1, **caractérisée en ce que** le polyamide est choisi dans le groupe comprenant le polyamide 6, le polyamide 11, le polyamide 12, le polyamide 4.6, le polyamide 6.6, le polyamide 6.10, le polyamide 6.36, les copolyamides 6/6.6 et 6/6.36, les mélanges et copolymères à base de ces polyamides et copolyamides.

3. Composition selon l'une quelconque des revendications 1 à 2, **caractérisée en ce qu'**elle comprend de 30 à 95 % en poids de polyamide.

4. Composition selon l'une quelconque des revendications 1 à 3, **caractérisée en ce que** le composé B (co)polymère styrénique comprend un caoutchouc sur lequel sont greffés de l'acrylonitrile et un composé styrénique, en particulier le composé styrénique est choisi parmi le styrène et l'a-méthyle- styrène.

5. Composition selon la revendication 4, **caractérisée en ce que** le caoutchouc du composé B est choisi dans le groupe comprenant : le polybutadiène, le caoutchouc butadiène-styrène, le caoutchouc butadiène- acrylate, le caoutchouc butadiène-acrylonitrile, le caoutchouc d'éthylène- propylène et le caoutchouc d'éthylène-propylène-diène ou des mélanges de deux ou de plus de deux de ces caoutchoucs.

6. Composition selon l'une quelconque des revendications 1 à 5, **caractérisée en ce que** le composé B est un copolymère Acrylonitrile-Butadiène- Styrène, comprenant le cas échéant des fonctions de compatibilisation avec le polyamide.

7. Composition selon l'une quelconque des revendications 1 à 6, **caractérisée en ce que** le composé C est choisi parmi les copolymères styrène- maléimide comprenant des groupements fonctionnels de compatibilisation avec le polyamide, les copolymères block Styrène-Ethylène-Butadiène-Styrène ou Styrène-Butadiène-Styrène le cas échéant totalement ou partiellement hydrogénés, présentant des groupements fonctionnels de compatibilisation avec le polyamide, en particulier les groupements fonctionnels de compatibilisation avec le polyamide sont choisis parmi les groupements anhydride maléique, acide carboxylique, ester.

8. Composition selon l'une quelconque des revendications 1 à 7, **caractérisée en ce que** les billes de verres creuses présentent un diamètre moyen compris entre 1 urn et 2 mm.

9. Composition selon l'une quelconque des revendications 1 à 8, **caractérisée en ce qu'**elle comprend de 1 à 60 % en poids de charges de renfort ou de remplissage.

10. Procédé de fabrication d'une composition selon l'une des revendications précédentes **caractérisé en ce qu'**il consiste à mélanger les composés à chaud dans une extrudeuse mono ou bivis, à une température suffisante pour maintenir la résine polyamide en milieu fondu ; ou à froid, dans un mélangeur mécanique.

11. Article obtenu par mise en forme de la composition selon l'une quelconque des revendications 1 à 9, en particulier ledit article est microcellulaire, tout particulièrement, l'article est un article de type profilé d'extrusion.

12. Fenêtre ou porte comprenant dans son encadrement un article de type profilé d'extrusion selon la revendication 11.

## Patentansprüche

1. Thermoplastische Zusammensetzung, umfassend mindestens die folgenden Verbindungen:
- Verbindung A: thermoplastisches Polyamid,
- Verbindung B: thermoplastisches Polymer mit einer geringeren Wärmeleitfähigkeit als Polyamid A,
- Verbindung C: gegebenenfalls ein oder mehrere Mittel zur Vermittlung von Verträglichkeit zwischen Verbindung A und Verbindung B, wovon mindestens eine funktionelle Gruppen zur Vermittlung von Verträglichkeit mit Verbindung A umfasst,
- Verbindung D: Glashohlkugeln und
- Verbindung E: gegebenenfalls verstärkende oder streckende Füllstoffe;
wobei es sich bei Verbindung B um ein Styrol-(co)polymer handelt und die Zusammensetzung 10 bis 20 %, bezogen auf das Gesamtgewicht der Zusammensetzung, Glashohlkugeln und 0,1 bis 30 Gew.-%, bezogen auf das Gesamtgewicht der Zusammensetzung, Verbindung B umfasst.

2. Zusammensetzung nach Anspruch 1, **dadurch gekennzeichnet, dass** das Polyamid aus der Gruppe umfassend Polyamid 6, Polyamid 11, Polyamid 12, Polyamid 4.6, Polyamid 6.6, Polyamid 6.10, Polyamid 6.36, den Copolyamiden 6/6.6 und 6/6.36, Mischungen und Copolymeren auf der Basis dieser Polyamide und Copolyamide ausgewählt ist.

3. Zusammensetzung nach einem der Ansprüche 1 bis 2, **dadurch gekennzeichnet, dass** sie 30 bis 95 Gew.-% Polyamid umfasst.

4. Zusammensetzung nach einem der Ansprüche 1 bis 3, **dadurch gekennzeichnet, dass** die Styrol(co)polymer-Verbindung B einen Kautschuk, auf den Acrylnitril und eine Styrolverbindung aufgepfropft sind, wobei die Styrolverbindung insbesondere aus Styrol und a-Methylstyrol ausgewählt ist, umfasst.

5. Zusammensetzung nach Anspruch 4, **dadurch gekennzeichnet, dass** der Kautschuk von Verbindung B aus der Gruppe umfassend Polybutadien, Butadien-Styrol-Kautschuk, Butadien-Acrylat-Kautschuk, Butadien-Acrylnitril-Kautschuk, Ethylen-Propylen-Kautschuk und Ethylen-Propylen-Dien-Kautschuk oder Mischungen von zwei oder mehr dieser Kautschuke ausgewählt ist.

6. Zusammensetzung nach einem der Ansprüche 1 bis 5, **dadurch gekennzeichnet, dass** es sich bei Verbindung B um ein Acrylnitril-Butadien-StyrolCopolymer handelt, das gegebenenfalls Funktionen zur Vermittlung von Verträglichkeit mit dem Polyamid umfasst.

7. Zusammensetzung nach einem der Ansprüche 1 bis 6, **dadurch gekennzeichnet, dass** die Verbindung C aus Styrol-Maleinimid-Copolymeren mit funktionellen Gruppen zur Vermittlung von Verträglichkeit mit dem Polyamid, gegebenenfalls vollständig oder teilweise hydrierten Styrol-Ethylen-Butadien-Styrol- oder Styrol-Butadien-Styrol-Blockcopolymeren mit funktionellen Gruppen zur Vermittlung von Verträglichkeit mit dem Polyamid ausgewählt ist, wobei die funktionellen Gruppen zur Vermittlung von Verträglichkeit mit dem Polyamid insbesondere aus Maleinsäureanhydrid-, Carbonsäure- und Estergruppen ausgewählt sind.

8. Zusammensetzung nach einem der Ansprüche 1 bis 7, **dadurch gekennzeichnet, dass** die Glashohlkugeln einen mittleren Durchmesser zwischen 1 µm und 2 mm aufweisen.

9. Zusammensetzung nach einem der Ansprüche 1 bis 8, **dadurch gekennzeichnet, dass** sie 1 bis 60 Gew.-% verstärkende oder streckende Füllstoffe umfasst.

10. Verfahren zur Herstellung einer Zusammensetzung nach einem der vorhergehenden Ansprüche, **dadurch gekennzeichnet, dass** es darin besteht, dass man die Verbindungen in der Wärme in einem Ein- oder Doppelschneckenextruder bei einer zum Halten des Polyamidharzes in schmelzflüssigem Zustand ausreichenden Temperatur oder in der Kälte in einem mechanischen Mischer mischt.

11. Gegenstand, erhalten durch Formen der Zusammensetzung nach einem der Ansprüche 1 bis 9, wobei der Gegenstand insbesondere mikrozellulär ist und es sich insbesondere bei dem Gegenstand um einen Gegenstand vom Extrusionsprofiltyp handelt.

12. Fenster oder Tür, das bzw. die in seinem bzw. ihrem Rahmen einen Gegenstand vom Extrusionsprofiltyp nach Anspruch 11 umfasst.

## Claims

1. Thermoplastic composition comprising at least the following compounds:
- Compound A: thermoplastic polyamide,
- Compound B: thermoplastic polymer having a lower thermal conductivity than polyamide A,
- Compound C: optionally one or more compatibilizers between compound A and compound B, at least one of which comprises functional groups for compatibilization with compound A,
- Compound D: hollow glass beads, and
- Compound E: optionally reinforcing fillers or extenders;
said compound B being a styrene (co)polymer and the composition comprising from 10 to 20%, relative to the total weight of the composition, of hollow glass beads and from 0.1 to 30 wt.%, relative to the total weight of the composition, of compound B.

2. Composition according to Claim 1, **characterized in that** the polyamide is selected from the group comprising polyamide 6, polyamide 11, polyamide 12, polyamide 4.6, polyamide 6.6, polyamide 6.10, polyamide 6.36, the copolyamides 6/6.6 and 6/6.36, and blends and copolymers based on these polyamides and copolyamides.

3. Composition according to either one of Claims 1 and 2, **characterized in that** it comprises from 30 to 95 wt.% of polyamide.

4. Composition according to any one of Claims 1 to 3, **characterized in that** the styrene (co)polymer compound B comprises a rubber on which acrylonitrile and a styrene compound are grafted, in particular the styrene compound is selected from styrene and α-methylstyrene.

5. Composition according to Claim 4, **characterized in that** the rubber of compound B is selected from the group comprising: polybutadiene, butadiene-styrene rubber, butadiene-acrylate rubber, butadiene-acrylonitrile rubber, ethylene-propylene rubber and ethylene-propylene-diene rubber or mixtures of two or more of these rubbers.

6. Composition according to any one of Claims 1 to 5, **characterized in that** compound B is an acrylonitrile-butadiene-styrene copolymer, if necessary comprising functions for compatibilization with the polyamide.

7. Composition according to any one of Claims 1 to 6, **characterized in that** compound C is selected from styrene-maleimide copolymers comprising functional groups for compatibilization with the polyamide, styrene-ethylene-butadiene-styrene or styrenebutadiene-styrene block copolymers if necessary fully or partially hydrogenated, having functional groups for compatibilization with the polyamide, in particular the functional groups for compatibilization with the polyamide are selected from the maleic anhydride, carboxylic acid, and ester groups.

8. Composition according to any one of Claims 1 to 7, **characterized in that** the hollow glass beads have an average diameter between 1 µm and 2 mm.

9. Composition according to any one of Claims 1 to 8, **characterized in that** it comprises from 1 to 60 wt.% of reinforcing fillers or extenders.

10. Method of manufacture of a composition according to one of the preceding claims, **characterized in that** it consists in hot mixing the compounds in a single-screw or twin-screw extruder, at a temperature sufficient to maintain the polyamide resin in the molten state; or cold mixing in a mechanical mixer.

11. Article obtained by forming the composition according to any one of Claims 1 to 9, in particular said article is microcellular, most particularly, the article is an article of the extruded profile type.

12. Window or door, the frame of which comprises an article of the extruded profile type according to Claim 11.
